# EUROPÄISCHE PATENTSCHRIFT

(11) **EP 2 812 599 B1**
(45) Veröffentlichungstag und Bekanntmachung des Hinweises auf die Patenterteilung: **07.09.2016**
(21) Anmeldenummer: 13704026.7
(22) Anmeldetag: 31.01.2013
(51) Int. Cl.: F16G 13/16, H02G 11/00, H02G 11/02

(54) **ENERGIEFÜHRUNGSVORRICHTUNG FÜR GROSSE VERDREHWINKEL**
POWER CONDUCTING DEVICE FOR LARGE ANGLES OF TWIST
DISPOSITIF DE GUIDAGE D'ÉNERGIE POUR GRANDS ANGLES DE ROTATION

(30) Priorität: 08.02.2012 DE 202012001228 U
(43) Veröffentlichungstag der Anmeldung: 17.12.2014
(73) Patentinhaber: Tsubaki Kabelschlepp GmbH, 57482 Wenden-Gerlingen (DE)
(72) Erfinder: SPIES, Jonathan, 57482 Wenden (DE); KEMPER, Uwe, 57223 Kreuztal (DE); AMEIS, Thomas, 57080 Siegen (DE)
(74) Vertreter: Neumann, Ditmar
(86) Internationale Anmeldenummer: PCT/EP2013/051856
(87) Internationale Veröffentlichungsnummer: WO 2013/117478

(56) Entgegenhaltungen:
- EP-A1- 0 443 600
- DE-A1-102007 038 567
- DE-U1-202011 004 776
- FR-A1- 2 506 088

## Beschreibung

Der Gegenstand der Erfindung bezieht sich auf eine Energieführungsvorrichtung umfassend wenigstens eine erste Leitungsführungseinrichtung und einen ersten Führungskanal, in dem die erste Leitungsführungseinrichtung angeordnet ist.

Zum Führen von Leitungen, Schläuchen oder dergleichen zwischen einem ortsfesten und einem beweglichen Anschlusspunkt sind Leitungsführungseinrichtungen bekannt. Solche Leitungsführungseinrichtungen werden auch als Energieführungseinheiten oder Energieführungsketten bezeichnet. Die Leitungsführungseinrichtungen werden in verschiedenen Apparaten, Maschinen und Einrichtungen eingesetzt, insbesondere dort, wo erforderlich ist, Verbrauchsmittel, Energie oder dergleichen mittels Leitungen, Schläuchen oder dergleichen von einem ortsfesten Anschluss zu einem beweglichen Anschluss eines Verbrauchers zu transportieren. Die Leitungsführungseinrichtung kann einsträngig oder mehrsträngig sein.

Die Leitungsführungseinrichtung weist ein Endglied und ein Anschlussglied auf. Zwischen dem Endglied und dem Anschlussglied und mit diesem verbunden ist ein auslenkbarer Abschnitt. Der Abschnitt kann durch Kettenglieder gebildet sein, die einen Kanal zur Aufnahme von Leitungen, Schläuchen oder dergleichen bilden. Ein Kettenglied kann zwei im Wesentlichen parallel zueinander angeordnete Laschen aufweisen, die durch wenigstens einen Quersteg miteinander verbunden sind.

Leitungsführungseinrichtungen werden derart angeordnet, dass diese einen Untertrum, einen Krümmungsabschnitt und einen Obertrum aufweisen. Es sind auch Anordnungen bekannt, bei denen die Leitungsführungseinrichtung um 90° gedreht ist. Wird eine solche gedrehte Leitungsführungseinrichtung mit einem Krümmungsradius und einem rückwärtigen Krümmungsradius ausgestattet, so kann die Leitungsführungseinrichtung in zwei bogenförmigen Richtungen bewegt werden. Bei einer Anordnung mit Untertrum und Obertrum kann diese ebenfalls in bogenförmiger Richtung um eine Hochachse gedreht werden, wenn zusätzlich eine seitliche Krümmung der Trume möglich ist. Insbesondere ist bei solchen Anordnungen bekannt, dass die Leitungsführungseinrichtung in einem Führungskanal angeordnet wird.

Üblicherweise ist das Endglied mit einem Innenkranz verbunden bzw. befestigt. Das Anschlussglied wird am Außenkranz des Führungskanals befestigt. Einer der beiden Kränze ist drehbar und bildet mit dem Endglied bzw. dem Anschlussglied einen Mitnehmeranschluss.

Durch Drehen des Kranzes legt sich die Leitungsführungseinrichtung am Innenumfang des Außenkranzes bzw. am Außenumfang des Innnenkranzes ab. Hierdurch können unterschiedliche Verdrehwinkel realisiert werden.

Es sind auch Ausführungen bekannt, bei denen zwei Leitungsführungseinrichtungen gegenläufig angeordnet werden, wodurch größere Verdrehwinkel realisiert werden können. Alternativ können bei gleichbleibendem realisierbarem Verdrehwinkel kürzere Leitungsführungseinrichtungen verwendet werden.

Zur Vergrößerung des erreichbaren Verdrehwinkels kann eine weitere Etage mit einem zweiten Führungskanal mit einer zweiten Leitungsführungseinrichtung vorgesehen sein, die im Wesentlichen der ersten Etage mit dem ersten Führungskanal mit der ersten Leitungsführungseinrichtung entspricht. Wenn beispielsweise der zweite Führungskanal mit der zweiten Leitungsführungseinrichtung von der Anordnung mit dem ersten Führungskanal und der ersten Leitungsführungseinrichtung identisch ist, kann der Verdrehwinkel durch den Einsatz der zweiten Etage gegenüber dem ersten Führungskanal verdoppelt werden. Entsprechend wird mit jeder weiteren Etage der Verdrehwinkel mit der Anzahl der Etagen multipliziert.

Es hat sich bei Energieführungseinrichtungen mit mehreren Etagen jedoch als nachteilig herausgestellt, dass beim Verdrehen der Energieführungsvorrichtung die zuerst angetriebene Etage zunächst voll verdreht wird und dann, ggf. mittels eines Anschlags, eine weitere Etage vollständig verdreht wird. Dies führt auch bei einer gleichförmigen Drehbewegung dazu, dass die weiteren Etagen mit einem Schlag beschleunigt werden und durch den entstehenden Ruck die Leitungsführungseinrichtungen übermäßig beansprucht werden können.

Die DE 102007038567 offenbart eine Energieführungseinrichtung nach dem Oberbegriff des Anspruchs 1.

Hiervon ausgehend liegt der vorliegenden Erfindung die Zielsetzung zugrunde, eine Energieführungsvorrichtung bereitzustellen, die die Beschleunigungsbelastung auf die Leitungsführungseinrichtungen minimiert.

Diese Aufgaben werden erfindungsgemäß durch eine Energieführungsvorrichtung mit den Merkmalen des Anspruchs 1 gelöst. Vorteilhafte Weiterbildungen und Ausgestaltungen der erfindungsgemäßen Energieführungsvorrichtung sind Gegenstand der Unteransprüche.

Die erfindungsgemäße Energieführungsvorrichtung umfasst wenigstens eine erste Leitungsführungseinrichtung zum Führen von Leitungen, Schläuchen oder dergleichen bilden. Weiterhin umfasst die Energieführungsvorrichtung einen ersten Führungskanal zwischen einem ortsfesten Anschlusspunkt und einem beweglichen Anschlusspunkt. Darüber hinaus umfasst die Energieführungsvorrichtung wenigstens einen zweiten Führungskanal, wobei die erste Leitungsführungseinrichtung ein erstes Endglied, ein erstes Anschlussglied und einen zwischen dem ersten Endglied und dem ersten Anschlussglied und mit diesen verbundenen Abschnitt aufweist, die zusammen einen Kanal zur Aufnahme von Leitungen, Schläuchen oder dergleichen bilden. Dabei sind die benachbarten ersten und zweiten Anschlussglieder oder ersten und zweiten Endglieder miteinander verbunden.

Der Führungskanal kann dabei in Verfahrrichtung verschiedene geschlossene Formen bilden, wie z. B. ein Oval oder eine sonstige geschlossene Freiform. Bevorzugt ist der Führungskanal kreisförmig. Der Innenkranz und der Außenkranz korrespondieren dabei in der Art, dass der Querschnitt eines Führungskanals im Wesentlichen konstant ist. Der Einfachheit halber wird im Folgenden bei einer Bewegung eines Kranzes von einem Drehen bzw. Verdrehen gesprochen. Der Kranz kann sich dabei aus einem geschlossenen Ringelement zusammensetzen oder aus einer Mehrzahl verschiedener Verfahrelemente zusammensetzen, die zum Beispiel relativ zueinander beweglich sind, und insbesondere nur über die Leitungsführungseinrichtung miteinander verbunden sind.

In der vorgeschlagenen Energieführungsvorrichtung sind ein erster Führungskanal und wenigstens ein zweiter Führungskanal angeordnet. In dem ersten Führungskanal ist wenigstens eine erste Leitungsführungseinrichtung und in dem zweiten Führungskanal wenigstens eine zweite Leitungsführungseinrichtung angeordnet. Die Leitungsführungseinrichtungen weisen ein Endglied und ein Anschlussglied auf, wobei das Endglied entweder mit dem jeweiligen Innenkranz oder Außenkranz und das Anschlussglied mit dem jeweilig anderen Außenkranz oder Innenkranz verbunden sind. Zwischen dem Endglied und dem Anschlussglied ist ein mit diesen verbundener Abschnitt vorgesehen, so dass ein Kanal zur Aufnahme von Leitungen, Schläuchen oder dergleichen gebildet ist. Der erste und der zweite Führungskanal sind relativ zueinander um eine gemeinsame Achse verdrehbar. Es sind entweder die Anschlussglieder der ersten und zweiten Leitungsführungseinrichtung oder die Endglieder der ersten und zweiten Leitungsführungseinrichtung miteinander verbunden. Durch den Krümmungsabschnitt zwischen dem Untertrum und dem Obertrum der Leitungsführungseinrichtungen wird die Geschwindigkeit vom Anschlussglied zum Endglied verdoppelt bzw. halbiert.

Durch das feste Verbinden der zwei Anschlussglieder oder der zwei Endglieder der benachbarten Führungskanäle wird somit die Geschwindigkeit wieder halbiert bzw. verdoppelt. Mit anderen Worten wird die Geschwindigkeit auf die beteiligten Führungskanäle gleichmäßig verteilt. Somit wird durch Antreiben eines einzigen Anschlussglieds oder Endglieds die gesamte Energieführungsvorrichtung verdreht, so dass alle Führungskanäle und alle Leitungsführungseinrichtungen in Bewegung versetzt werden. Hierdurch wird vermieden, dass eine Leitungsführungseinrichtung ruckartig beschleunigt wird, während antriebsseitig, zum Beispiel über einen Mitnehmerarm, eine gleichmäßige Verdrehung stattfindet. Hierdurch kann die Leitungsführungseinrichtung kleiner dimensioniert werden und der Gesamtaufbau der Energieführungsvorrichtung wird kleiner.

Gemäß einer vorteilhaften Ausgestaltung der Energieführungsvorrichtung wird vorgeschlagen, dass der Außenkranz oder der Innenkranz des ersten Führungskanals ortsfest ist. Somit kann der erste Führungskanal mit einem entsprechenden Montagegestell am Boden oder dergleichen verbunden sein. Gleichzeitig kann das erste Anschlussglied oder das erste Endglied mit dem benachbarten zweiten Anschlussglied bzw. zweiten Endglied drehbar fest verbunden sein .Somit kann trotz der ortsfesten Anordnung des Außenkranzes oder Innenkranzes der erste Führungskanal bereits an der Drehbewegung teilnehmen.

Gemäß einer weiteren vorteilhaften Ausgestaltung der Energieführungsvorrichtung sind die Führungskanäle übereinander angeordnet. Hierdurch wird eine platzsparende Anordnung erreicht, die in einem relativ schmalen Band zwischen den jeweiligen Außenkränzen und Innenkränzen gebildet ist. Bei einer Anordnung übereinander sind bevorzugt der erste und der zweite Führungskanal von ihren Ausmaßen der Innenkränze und Außenkränze deckungsgleich.

Gemäß einer weiteren vorteilhaften Ausgestaltung der Energieführungsvorrichtung Bilden zwei benachbarte Innenkränze oder zwei benachbarte Außenkränze eine erste Wand eines ersten Rollwagens und der erste Rollwagen weist weiterhin einen ersten Boden auf, an dem gegenüber der ersten Wand eine erste Rolle angeordnet ist. Durch diese Anordnung wird erreicht, dass die benachbarten Anschlussglieder bzw. Endglieder geführt durch einen ersten Rollwagen fest miteinander verbunden sind und sich so mit stets gleicher Geschwindigkeit bewegen. Gleichzeitig sind die gegenüberliegenden Endglieder bzw. Anschlussglieder in einer anderen Geschwindigkeit bewegbar. Bevorzugt bewegen sich diese mit der halben bzw. doppelten Geschwindigkeit. Der Boden des Rollwagens bildet dabei eine Verbindung zur gegenüberliegenden Seite, an der eine erste Rolle vorgesehen ist. Durch diese Rolle wird eine Relativbewegung zwischen den nicht fest verbundenen Anschlussgliedern bzw. Endgliedern möglich.

In einer weiteren vorteilhaften Ausgestaltung der Energieführungsvorrichtung weist ein benachbarter zweiter Rollwagen eine der ersten Wand des ersten Rollwagens gegenüberliegende zweite Wand und einen zweiten Boden auf, wobei die zwei benachbarten Rollwagen einen Führungskanal umschließen. Durch diese Anordnung wird es möglich, dass in jeder Etage ein Führungskanal gebildet wird, bei dem die Endglieder und Anschlussglieder mit unterschiedlichen Geschwindigkeiten bewegt werden und letztendlich dazu führen, dass alle Leitungseinrichtungen der Energieführungsvorrichtung gleichzeitig bewegt werden.

In einer weiteren vorteilhaften Ausgestaltung der Energieführungsvorrichtung weist der erste Führungskanal eine ortsfeste Führung, einen ortsfesten Boden und eine ortsfeste Wand auf, wobei die ortsfeste Wand ein Auflager für die erste Rolle bildet. Durch diese Anordnung wird es möglich, dass der erste Rollwagen auf der ortsfesten Wand des ersten Führungskanals abrollt. Darüber hinaus wird ein reibungsarmer Ablauf der Verdrehung innerhalb des Führungskanals und zum benachbarten Führungskanal erreicht.

Gemäß einer weiteren vorteilhaften Ausgestaltung der Energieführungsvorrichtung sind drei übereinander angeordnete Führungskanäle vorgesehen, in denen jeweils wenigstens eine Leitungsführungseinrichtung angeordnet ist. Durch die Anordnung von wenigstens drei übereinander angeordneten Führungskanälen wird ein sehr großer Verdrehwinkel erreicht. Insbesondere wird der Vorteil der erfindungsgemäßen Energieführungsvorrichtung gegenüber einer ruckartigen Mitnahme mittels einer Energieführungseinrichtung nach dem Stand der Technik spätestens ab drei übereinander angeordneten Führungskanälen signifikant; denn im Stand der Technik müssen deutlich stabilere und damit größere und schwerere Leitungsführungseinrichtungen verwendet werden, als dies mit der erfindungsgemäßen Lösung notwendig ist.

In einer weiteren vorteilhaften Ausgestaltung der Energieführungsvorrichtung weist die erste Wand des ersten Rollwagens zur ortsfesten Führung hin eine dritte Rolle auf, die auf der ortsfesten Führung abrollt, und eine zweite Rolle zwischen einem darauf angeordneten Rollwagen und dem ersten Rollwagen angeordnet. Durch die Anordnung der Rollen ist es möglich, dass die Rollwagen reibungsarm aufeinander abrollen. Insbesondere können reibungsarme Relativbewegungen zwischen den Innenkränzen und den Außenkränzen über diese Rollen bewerkstelligt werden.

In einer weiteren vorteilhaften Ausgestaltung der Energieführungsvorrichtung ist die zweite Rolle an dem zweiten Rollwagen angeordnet. Durch diesen integralen Aufbau wird die Energieführungsvorrichtung sehr kompakt.

Gemäß einer weiteren vorteilhaften Ausgestaltung der Energieführungsvorrichtung bildet ein Führungskanal einen Boden und eine mit dem Boden verbundene Wand und ist an dem Boden gegenüber der Wand eine Rolle angeordnet, wobei die Rolle auf einer darunter angeordneten Wand abrollt und eine darüber angeordnete Wand auf der ersten Rolle abrollt. Wird z. B. die darüber angeordnete Wand angetrieben und rollt auf der ersten Rolle ab, so rollt diese Rolle auf der darunter angeordneten Wand ab. Durch die Befestigung der Rolle an dem Boden des Führungskanals wird ebenfalls die Wand des Führungskanals angetrieben. Somit wird der Verfahrweg durch die Rolle übertragen jeweils halbiert auf die nächste Etage bzw. den nächsten Führungskanal übertragen. Bspw. wird bei einer Anordnung mit drei Führungskanälen übereinander ein Anschlussglied oder Endglied angetrieben, welches an einer Wand befestigt ist, das auf einer Rolle abrollt. Diese Rolle ist mit einem Boden befestigt, welcher wiederum gegenüberliegend mit einer Wand befestigt ist. An dieser Wand ist das Endglied bzw. Anschlussglied des angetriebenen Führungskanals verbunden und mit dem Endglied bzw. Anschlussglied des darunter liegenden Führungskanals verbunden. Durch das Abrollen der angetriebenen Wand wird auch die gegenüberliegende Wand angetrieben und rollt wiederum auf einer unter der angetriebenen Wand angeordneten weiteren Wand ab. Die gegenüberliegende Wand mit den zwei Endgliedern bzw. Anschlussgliedem rollt auf einer ortsfesten Wand ab, wobei dazwischen wiederum eine Rolle angeordnet ist, die an einem Boden verbunden ist, welcher an der weiteren Wand unterhalb der angetriebenen Wand und unterhalb einer Rolle angeordnet ist. Durch diese Wirkzusammenhänge wird die Geschwindigkeit bzw. die zurückzulegende Strecke von der angetriebenen Wand auf die gegenüberliegende Wand und wiederum auf die weitere darunter angeordnete Wand jeweils halbiert, so dass das angetriebene Anschlussglied oder Endglied die dreifache Geschwindigkeit von dem untersten Anschlussglied bzw. Endglied beschreibt bzw. in der gleichen Zeit die dreifache Strecke zurücklegt.

Die Relativbewegung zwischen dem Anschlussglied und dem Endglied eines jeweiligen Führungskanals ist identisch. Durch die beschriebene Rollenanordnung wird nicht nur erreicht, dass alle Leitungsführungseinrichtungen in allen Führungskanälen (bei einem gleichmäßigen Antrieb) ohne ruckartige Beschleunigung gleichmäßig angetrieben werden, sondern auch, dass die Kraftübertragung von einer Etage auf die nächste Etage nicht über die Leitungsführungseinrichtungen stattfindet, sondern vollständig über die Rollen, Böden und Wänden erreicht wird.

In einer weiteren vorteilhaften Ausgestaltung der Energieführungsvorrichtung sind der Radius der Innenkränze und/oder der Radius der Außenkränze der verschiedenen Führungskanäle jeweils gleich. Durch die gleichen Radii bzw. die deckungsgleichen Innenkränze und Außenkränze wird die Übertragung der Kraft in jedem der Führungskanäle identisch. Hierdurch wird eine gute Übertragung der Drehbewegung von einem Führungskanal auf den nächsten Führungskanal erreicht. In einer solchen Anordnung kann auf ein Übersetzungsgetriebe verzichtet werden. Bei dieser Ausführung müssen allerdings die Trägheiten und Reibungsverhältnisse der Führungskanäle aufeinander abgestimmt werden.

In einer weiteren vorteilhaften Ausgestaltung der Energieführungsvorrichtung sind die Führungskanäle nebeneinander angeordnet und der erste Außenkranz des ersten Führungskanals und der zweite Innenkranz des zweiten Führungskanals werden durch eine gemeinsame Wand gebildet. Durch eine Anordnung der Führungskanäle nebeneinander wird eine besonders flache Anordnung erreicht, die lediglich in etwa der Höhe der verwendeten Leitungsführungseinrichtungen entsprechen muss. Indem ein jeweiliger Außenkranz zugleich den Innenkranz des benachbarten Führungskanals bildet, wird die Bewegung einer Leitungsführungseinrichtung durch die Endglieder bzw. Anschlussglieder auf die daneben angeordnete Leitungsführungseinrichtung übertragbar. Insbesondere ist eine Bewegungsübertragung durch andere, separate Hilfsmittel wie zum Beispiel Zahnräder und Zahnstangen oder Rollenkette und Kettenrad möglich, die eine gleichmäßige Verteilung der Bewegung der Führungskanäle bzw. der Leitungsführungseinrichtungen erzielt.

Gemäß einer weiteren vorteilhaften Ausgestaltung der Energieführungsvorrichtung sind Rollen zwischen den Führungskanälen vorgesehen und mindestens eine der Rollen bildet eine Geschwindigkeitsübersetzung für angrenzende Führungskanäle. In der Anordnung übereinander wird durch die Anordnung einer Rolle zwischen zwei Wänden und der Befestigung an einem Boden eines Rollwagens eine Übertragung der Bewegung von einem Führungskanal auf den nächsten Führungskanal ermöglicht. Es können aber auch Rollen nach Art eines Getriebes zwischen den angrenzenden Führungskanälen gebildet sein. In der Anordnung nebeneinander können die Rollen beispielsweise an einer Wand, d.h. einem Innenkranz und Außenkranz benachbarter Führungskanäle, befestigt sein und sich von dem Innenkranz des inneren Führungskanals zum Außenkranz des äußeren Führungskanals erstrecken und so eine halbierende bzw. verdoppelnde Geschwindigkeitsübersetzung bewerkstelligen.

In einer weiteren vorteilhaften Ausgestaltung der Energieführungsvorrichtung ist in einem Führungskanal jeweils ein Zwischenwagen vorgesehen, der auf den Abschnitt der jeweiligen Leitungsführungseinrichtung einwirkt und an dem jeweils zumindest eine Rolle befestigt ist, die an dem jeweiligen Innenkranz und dem jeweiligen Außenkranz abrollt. Der Zwischenwagen wirkt beispielsweise derart auf die Leitungsführungseinrichtung ein, dass der Abschnitt zwischen dem Endglied und dem Anschlussglied durch ein abgerundetes Ende des Zwischenwagens, das dem erwünschten Beugungsradius der Leitungsfürhungseinrichtung entspricht, gedrückt wird. Damit wird es möglich, das Endglied mit einer anderen Geschwindigkeit als das Anschlussglied zu bewegen, insbesondere wird die Geschwindigkeit halbiert. Vorteilhafter Weise wird zumindest einer der Zwischenwagen mit zumindest einer Rolle versehen, die sich von dem Innenkranz zum Außenkranz des jeweiligen Führungskanals erstreckt. Somit wird zum Beispiel eine Bewegung des Innenkranzes in einen Vortrieb des Zwischenwagens und weiterhin einen Vortrieb des Außenkranzes verwandelt. So bewegt sich in diesem Beispiel ein jeweiliger Innenkranz mit der doppelten Geschwindigkeit wie der jeweilige Außenkranz. Darüber ist eine gleichmäßige Geschwindigkeitsverteilung über die Energieführungsvorrichtung möglich.

In einer weiteren vorteilhaften Ausgestaltung der Energieführungsvörrichtung ist die Leitungsführungseinrichtung jeweils nur in einer Ebene beugbar. Beispielsweise durch eine um 90° gedrehte Anordnung des Obertrums und Untertrums der Leitungsführungseinrichtung, sodass die Trumhälften in einer Ebene seitlich zum gebeugten Abschnitt angeordnet sind, muss die Leitungsführungseinrichtung lediglich in Richtung des beugbaren Abschnitts krümmbär bzw. beugbar sein und in Gegenrichtung entlang des Innenkranzes beugbar sein. Hierdurch wird der Einsatz einer einfach aufgebauten Leitungsführungseinrichtung möglich. Insbesondere wird ein seitliches Beugen der Leitungsführungseinrichtung (seitlich zur Anordnung mit Ober- und Untertrum) vermieden, wofür regelmäßig aufwendige Gelenke eingesetzt werden müssen.

In einer anderen vorteilhaften Ausgestaltung der Energieführungsvorrichtung sind ein Anschlussglied und ein Endglied in mindestens einem der Führungskanäle übereinander angeordnet. D.h. der Obertrum ist im Schwerefeld oberhalb des Untertrums angeordnet. Eine solche Anordnung erfordert es, dass die Leitungsführungseinrichtung nicht nur in der Beugungsebene zwischen dem Untertrum und dem Obertrum, sondern auch in der Ebene des Verdrehwinkels beugbar sein. Durch diese Anordnung wird es aber möglich, die gesamte oder Teile der Energieführungsvorrichtung sehr schmal auszugestalten. Hierbei sind die Führungskanäle lediglich so breit, wie die Breite der Leitungsführungseinrichtung.

In einer weiteren vorteilhaften Ausgestaltung der Energieführungsvorrichtung bilden der Innenkranz und der Außenkranz eines Führungskanals seitliche Wände aus und die Endglieder und die Anschlussglieder sind an den seitlichen Wänden angeordnet. Durch diese Anordnung wird ein besonders einfacher Aufbau möglich, bei dem der Abstand zwischen Außenkranz und Innenkranz lediglich so groß sein muss, dass der Krümmungsabschnitt der Leitungsführungseinrichtung ausreichend Platz bekommt. Darüber hinaus können die Führungskanäle sehr flach gestaltet werden, weil sie lediglich eine Höhe entsprechend der Breite der Leitungsführungseinrichtung aufweisen müssen. Mit der Breite ist hier das Maß der Leitungsführungseinrichtung parallel zur Achse der Beugung der Leitungsführungseinrichtung gemeint.

In einem weiteren Aspekt, der nicht Teil der Erfindung ist, wird auch ein Rollwagen vorgeschlagen, der sich zur Aufnahme mindestens einer Leitungsführungseinrichtung eignet und zumindest einen Boden, eine Wand, die sich seitlich des Bodens senkrecht beidseitig erstreckt, und eine erste Rolle aufweist, die gegenüber der Wand seitlich am Boden angeordnet ist. Ein solcher Rollwagen ist besonders dafür geeignet, eine Geschwindigkeitsübertragung von zwei angrenzenden Führungskanälen zu unterstützen. Insbesondere durch die erste Rolle, die zwischen zwei gegenüberliegenden und angrenzenden Wänden angeordnet werden kann, wird eine Übertragung einer Bewegung einer der beiden gegenüberliegenden Wände erreicht, so dass die Leitungsführungseinrichtungen in den benachbarten Führungskanälen die halbe Strecke in der gleichen Zeit zurücklegen wie die angetriebene gegenüberliegende Wand. Insbesondere ist der Rollwagen für den Einsatz einer Energieführungsvorrichtung gemäß der obigen Beschreibung geeignet.

In einem weiteren Aspekt, der nicht Teil der Erfindung ist, wird auch ein Zwischenwagen zur Anrodnung in einem Führungskanal zur Einwirkung auf einen Abschnitt einer Leitungsführungseinrichtung beschrieben, der zumindest eine Rolle aufweist, die sich von einem Innenkranz zu einem Außenkranz des Führungskanals erstreckt, und der Zwischenwagen ist durch den Innenkranz und/oder Außenkranz antreibbar. Der Zwischenwagen ist bevorzugt dazu eingerichtet auf den Abschnitt einer Leitungsführungseinrichtung zwischen dem Endglied und dem Anschlussglied genau in dem Bereich einzuwirken, wo der Abschnitt gebeugt wird. Zu diesem Zweck weist der Zwischenwagen ein abgerundetes Ende auf, welches dem erwünschten Beugeradius des Abschnitts entspricht. Mit dem Zwischenwagen wird die Leitungsführungseinrichtung in dem jeweiligen Führungskanal bewegt oder zumindest zum Anliegen an dem jeweiligen Innenkranz und Außenkranz gebracht.

Weiterhin vorteilhaft ist es, an dem Zwischenwagen zumindest eine Rolle zu befestigen, die sich von dem jeweiligen Innenkranz zum jeweiligen Außenkranz des betreffenden Führungskanals erstreckt und daran abrollen kann. Dabei kann die Rolle auch als Zahnrad ausgeführt sein und der korrespondierende Innenkranz und Außenkranz jeweils eine Zahnstange ausbilden. durch diese anordnung ist es möglich die Geschwindigkeiten von einem Endglied auf ein Anschlussglied, oder umgekehrt, eines Führungskanals halbiert oder verdoppelt zu übertragen. Insbesondere wird bei einer Verwendung zumindest einer Rolle pro Führungskanal eine Antriebsgeschwindigkeit gleichmäßig auf die Führungskanäle verteilt, sodass die relative Geschwindigkeit zwischen dem jeweiligen Endglied und Anschlussglied in jedem Führungskanal gleich ist. Dieses Prinzip ist allgemein durch jede der zuvor und hiernach beschriebenen Ausgestaltungen der Erfindung erzielbar.

Die in den Ansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Weitere Vorteile und Eigenschaften der erfindungsgemäßen Energieführungsvorrichtung werden anhand des in den Zeichnungen dargestellten Ausführungsbeispiels erläutert, ohne dass der Gegenstand der Erfindung auf dieses konkrete Ausführungsführungsbeispiel beschränkt ist. Es zeigen:
- Fig. 1:: eine Energieführungsvorrichtung in Draufsicht in einer Nulllage;
- Fig. 2:: eine Energieführungsvorrichtung in Draufsicht nach Fig. 1 in einer um 90° ausgelenkten Position;
- Fig. 3:: einen Ausschnitt einer Energieführungsvorrichtung im Querschnitt;
- Fig. 4:: eine Energieführungsvorrichtung im Schnitt in schematischer Darstellung der Geschwindigkeitsübersetzung;
- Fig. 5:: eine schematische Darstellung einer abgewickelten Energieführungsvorrichtung mit den absoluten Geschwindigkeiten;
- Fig. 6:: eine Energieführungsvorrichtung in Draufsicht in einer flachen Anordnung; und
- Fig. 7:: eine Energieführungsvorrichtung in Draufsicht in einer alternativen flachen Anordnung.

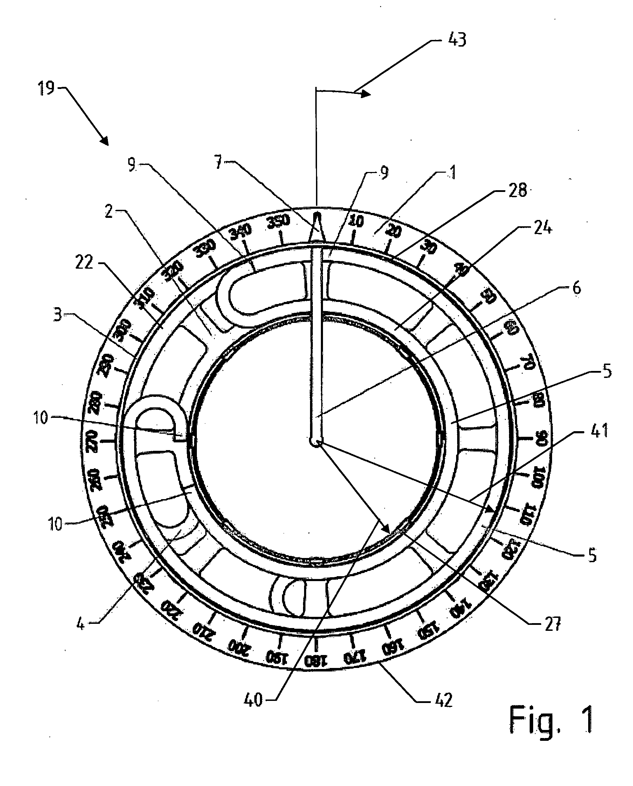

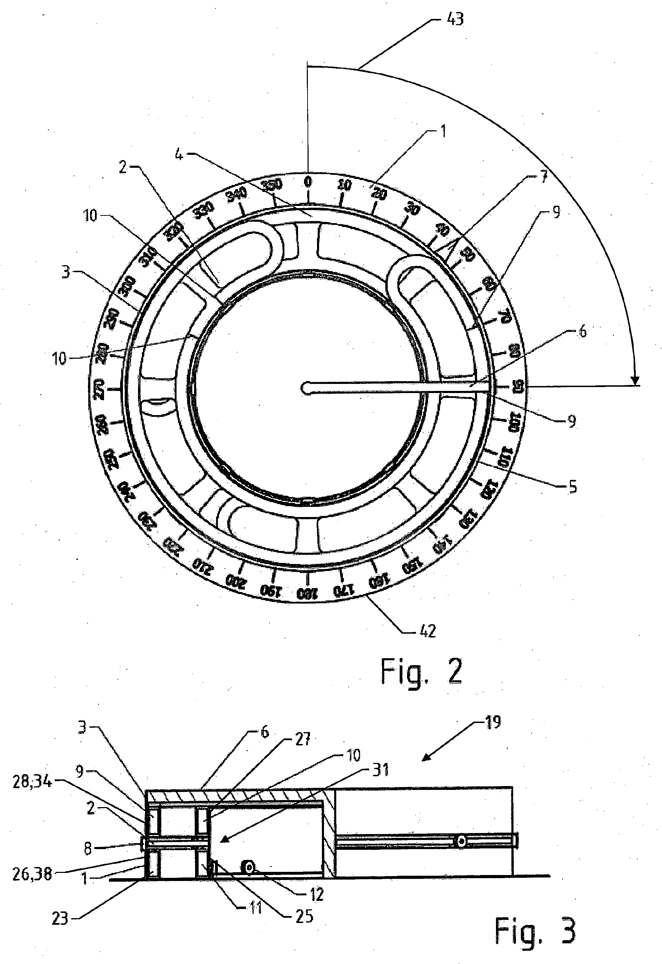

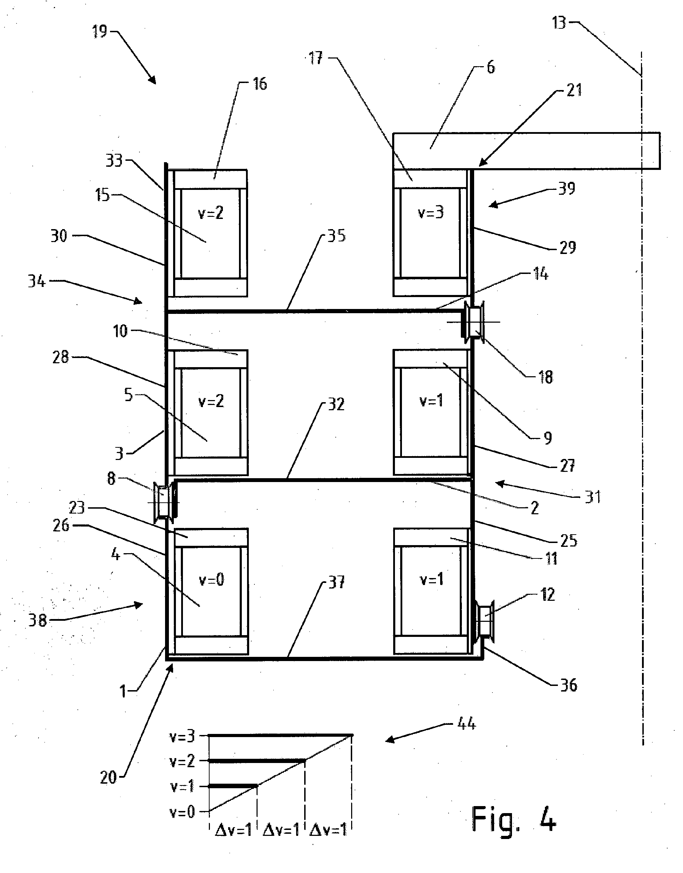

Fig. 1 zeigt eine Energieführungsvorrichtung 19 in Draufsicht mit einem ersten Führungskanal 1 und einem zweiten Führungskanal 3. In dem (oberen) zweiten Führungskanal 3 sind zwei Leitungsführungseinrichtungen 5 mit jeweils einem Anschlussglied 9, welches am Außenkranz 28 angeordnet ist. Weiterhin weisen die Leitungsführungseinrichtungen 5 jeweils ein Endglied 10 auf, welches am Innenkranz 27 angeordnet ist. Die zweiten Leitungsführungseinrichtungen 5 und eine erste Leitungsführungseinrichtung 4 im ersten Führungskanal 1 weisen jeweils einen zweiten Abschnitt 24 bzw. ersten Abschnitt 22 auf. Die erste Leitungsführungseinrichtung ist größtenteils verdeckt dargestellt und die entsprechenden Bezugszeichen werden nur der Vollständigkeit halber genannt, sind aber der Fig. 1 teilweise nicht zu entnehmen; insoweit wird auf die Fig. 3 und 4 verwiesen. Die Abschnitte 24 und 22 liegen sich je nach Position an dem jeweiligen Innenkranz 27 (bzw. 25, nicht dargestellt) oder Außenkranz 28 (bzw. 26, nicht dargestellt) an. In dieser Ausführung werden die Leitungsführungseinrichtungen 4 und 5 nur in einer Ebene gebeugt, nämlich in der Ebene der Draufsicht. In der Fig. 1 ist ebenfalls der erste Rollwagen 2 zu erkennen, an dem die erste Leitungsführungseinrichtung 4 und die zweite Leitungsführungseinrichtung 5 derart gelagert sind, dass beide Leitungsführungseinrichtungen 4, 5 bei einer Bewegung des Mitnehmerarms 6 gleichzeitig in Bewegung versetzt werden. In diesem Beispiel ist der Radius 40 der beiden Innenkränze 25 und 27 sowie der Radius 41 der beiden Außenkränze 26 und 28 jeweils identisch, wobei in dieser Darstellung der erste Innenkranz 25 und Außenkranz 26 verdeckt sind. Zur Veranschaulichung der Bewegungsabläufe ist in dem Schaubild eine Winkelanzeige 42 dargestellt, in der ein Positionsanzeiger 7 den Verdrehwinkel 43 des Rollwagens 2 anzeigt. In der Fig. 1 befindet sich die Energieführungsvorrichtung 18 in der Ausgangslage, was durch den Positionsanzeiger 7 und den Mitnehmerarm 6 mithilfe des Verdrehwinkels 43 bei null verdeutlicht ist.

In Fig. 2 ist der gleiche Aufbau einer Energieführungsvorrichtung 18 wie in Fig. 1 gezeigt. Allerdings ist hierbei der Mitnehmerarm 6 um 90° verdreht worden. Der Positionsanzeiger 7 des ersten Rollwagens 2 ist hierbei nur um 45°, das heißt also um die Hälfte der Strecke, mitgelaufen. In der Fig. 2 ist ebenfalls zu erkennen, wie sich der erste Abschnitt 4 und der zweite Abschnitt 5 durch die Verdrehung verlagern, das heißt die Verhältnisse der Abschnitte zwischen am Innenkranz 25, 27 anliegend und am Außenkranz 26, 28 anliegend haben sich mit der Verdrehung verändert. Weil die zurückgelegte Strecke in jedem Führungskanal 1, 3 zwischen dem Englied 11, 10 und dem Anschlussglied 23, 9 gleich ist, werden die maximalen Verdrehwinkel aufgrund der Länge der Leitungsführungseinrichtungen auch gleichzeitig erreicht.

In Fig. 3 ist ein Ausschnitt einer Energieführungsvorrichtung im Querschnitt gezeigt, wie sie z. B. in den Fig. 1 und 2 dargestellt ist. Hierbei ist der untere erste Führungskanal 1 und der obere zweite Führungskanal 3 gezeigt, in denen das erste Anschlussglied 23 im erste Führungskanal 1 und das erste Endglied 11 im ersten Führungskanal 1 gezeigt ist und das zweite Anschlussglied 9 sowie das zweite Endglied 10 im zweiten Führungskanal 3 gezeigt sind. Die Endglieder 11, 10 sind an dem ersten Rollwagen 2 befestigt, welcher nach außen hin eine erste Rolle 8 aufweist und nach innen eine dritte Rolle 12 aufweist. Der erste Innenkranz 25 und der zweite Innenkranz 27 bilden die erste Wand 31 des ersten Rollwagens 2. Der erste Außenkranz 26 bildet die ortsfeste Wand 38 und der zweite Außenkranz 28 bildet die zweite Wand 34. Die erste Rolle 8 ist zwischen der zweiten Wand 34 und der ortsfesten Wand 38 angeordnet. Wird die zweite Wand 34 über den Mitnehmerarm 6 verdreht, so wird die erste Rolle 8 angetrieben und rollt auf der ortsfesten Wand 38 ab. Durch dieses Abrollen auf der ersten Wand 38 wird ebenfalls der erste Rollwagen 2 in Bewegung versetzt, der mittels der dritten Rolle 12 verdrehbar ist. Über die erste Wand 31 werden somit die Endglieder 10 und 11 mit der gleichen Geschwindigkeit und zwar der halben Geschwindigkeit von dem Mitnehmerarm 6 bzw. dem zweiten Anschlussglied 9 bewegt. Das erste Anschlussglied 23 bleibt dabei ortsfest.

In der Fig. 4 ist eine Ausgestaltung der Energieführungsvorrichtung 19 mit drei Führungskanälen 1, 3, 33 gezeigt. Der zweite Führungskanal 3 wird von einem ersten Boden 32 dem zweiten Außenkranz 28, einem zweiten Boden 35 und dem zweiten Innenkranz 27 umschlossen. Der dritte Führungskanal 33 wird von einem zweiten Boden 35, einem dritten Außenkranz 30, einem dritten Innenkranz 29 und einem Mitnehmerarm 6 umschlossen. Hierbei werden ein erster Rollwagen 2 und ein zweiter Rollwagen 14 verwendet, die an ihrem ersten Boden 32 bzw. an dem zweiten Boden 35 eine erste Rolle 8 bzw. eine zweite Rolle 18 aufweisen. Der erste Außenkranz 26 bildet die ortsfeste Wand 38, an der das erste Anschlussglied 23 der ersten Leitungsführungseinrichtung 4 in dem ersten Führungskanal 1 an dem ortsfesten Anschlusspunkt 20 fixiert ist. Somit ist die Geschwindigkeit des ersten Anschlussglieds 23 gleich null (v=0). Der erste Führüngskanal 1 ist von der ortsfesten Wand 38 dem ortsfesten Boden 37, dem ersten Innenkranz 25 und dem ersten Boden 32 umschlossen. An dem ortsfesten Boden 37 ist am Innenkranz 25 weiterhin eine ortsfeste Führung 36 vorgesehen, auf der die dritte Rolle 12 des ersten Rollwagens 2 abrollen kann. Der erste Rollwagen 2 weist eine erste Wand 31 auf, die sich aus dem ersten Innenkranz 25 und dem zweiten Innenkranz 27 zusammensetzt. An der ersten Wand 31 sind im ersten Führungskanal 1 das erste Endglied 11 und im zweiten Führungskanal 3 das zweite Endglied 9 angeordnet, so dass das erste Endglied 11 und das zweite Endglied 9 mit der gleichen Geschwindigkeit (v=1) bewegt werden. Der zweite Rollwagen 14 weist eine zweite Wand 34 auf, die sich aus dem zweiten Außenkranz 28 und dem dritten Außenkranz 30 zusammensetzt. An der zweiten Wand 34 sind im zweiten Führungskanal 3 das zweite Anschlussglied 10 der zweiten Leitungsführungseinrichtung 5 und das dritte Anschlussglied 16 im dritten Führungskanal 33 der Leitungsführungseinrichtung 5 angeordnet, so dass das zweite Anschlussglied 10 und das dritte Anschlussglied 16 sich ebenfalls mit der gleichen Geschwindigkeit (v=2) bewegen. Zuletzt wird der dritte Rollwagen 39 allein mit dem dritten Innenkranz 29 gebildet, an dem das dritte Endglied 17 angeordnet ist und welche gemeinsam über den Mitnehmerarm 6 um die Achse 13 verdreht werden. Das dritte Endglied 17 ist somit an dem beweglichen Anschlusspunkt 21 angeordnet. Das dritte Endglied 17 weist eine Geschwindigkeit (v=3) auf.

Wird der Mitnehmerarm 6 in Bewegung versetzt, so rollt der dritte Innenkranz 29 auf der zweiten Rolle 18 des zweiten Rollwagens 14 ab. Damit rollt auch die zweite Rolle 18 auf der ersten Wand 31 ab und der zweite Rollwagen 14 wird damit in Bewegung versetzt. Damit rollt wiederum die zweite Wand 34 auf der ersten Rolle 8 ab, welche wiederum auf der ortsfesten Wand 38 abrollt und somit den ersten Rollwagen 2 in Bewegung versetzt, welcher über die dritte Rolle 12 auf der ortsfesten Führung 36 abrollt. Der Zusammenhang der Geschwindigkeiten ist in dem Geschwindigkeitsprofil 44 der Fig. 4 gezeigt, bei der die absolute Geschwindigkeit jeweils um eine feste Relativgeschwindigkeit (Δv=1) zunimmt. Die Geschwindigkeit (v=3) des dritten Endglieds 17 entspricht daher der dreifachen Geschwindigkeit (v=1) des ersten Endglieds 11 und zweiten Endglieds 9. Ebenso entspricht die Geschwindigkeit (v=2) des dritten Anschlussglieds 16 und zweiten Anschlussglieds 10 dem zweifachen der Geschwindigkeit (v=1) des zweiten Endglieds 9 und ersten Endglieds 11.

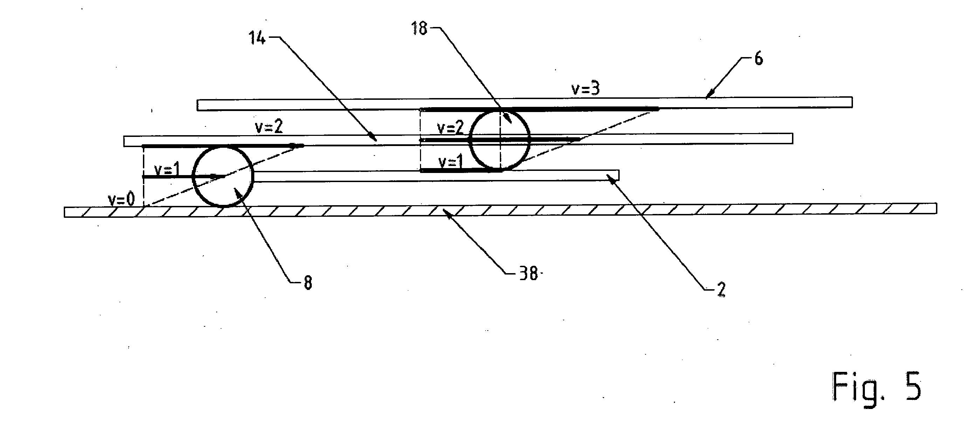

In Fig. 5 sind nochmal die Zusammenhänge der Geschwindigkeiten einer Anordnung, wie bspw. in Fig. 4 dargestellt, genauer erläutert. Wird der Mitnehmerarm 6 mit der Geschwindigkeit v=3 in Bewegung versetzt, so rollt die zweite Rolle 18 auf dem ersten Rollwagen 2 mit der Geschwindigkeit ab, der sich mit der Geschwindigkeit v=1 bewegt, und nimmt so den zweiten Rollwagen 14 mit der Geschwindigkeit v=2 mit. Dadurch wiederum wird die erste Rolle 8 auf der ortsfesten Wand 38 abrollen und somit den ersten Rollwagen 2 mit der Geschwindigkeit v=1 vorwärts bewegen.

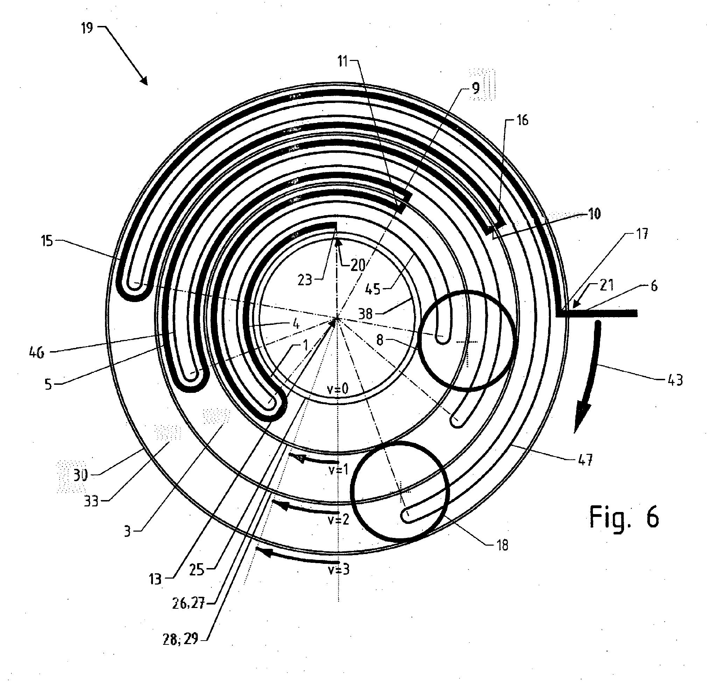

Fig. 6 zeigt eine Energieführungsvorrichtung 19 in einer flachen Anordnung, in der die Führungskanäle 1, 3 und 33 in einer Ebene nebeneinander angeordnet werden und sich um die gemeinsame Achse 13 bewegen können. Es sind auch Anordnungen möglich, die die flache Anordnung mit der oben beschriebenen Anordnung übereinander kombiniert. Die Energieführungsvorrichtung 19 in Fig. 6 weist einen ersten Innenkranz 25 auf, der die ortsfeste Wand 38 bildet und an dem das erste Anschlussglied 23 angeordnet ist, welches damit den ortsfesten Anschlusspunkt 20 bildet. Der erste Außenkranz 26, an dem das erste Endglied 11 angeordnet ist, bildet sogleich den zweiten Innenkranz 27, an dem das zweite Endglied 9 angeordnet ist. Darauf folgt der zweite Außenkranz 28, an dem das zweite Anschlussglied 10 angeordnet ist, und zugleich den dritten Innenkranz 29 bildet, an dem wiederum das dritte Anschlussglied 16 angeordnet ist. Ganz außen in diesem Beispiel befindet sich der dritte Außenkranz 30, an dem schließlich das dritte Endglied 17 angeordnet ist und über den Mitnehmerarm 6 bewegt wird und den beweglichen Anschlusspunkt 21 bildet. Die Anordnung des ortsfesten Anschlusspunktes 20 und des beweglichen Anschlusspunktes 21 kann aber auch genau umgekehrt gewählt sein.

In diesem Beispiel der Fig. 6 wird nun eine Bewegung ausgehend von dem Mitnehmerarm 6 auf die Kränze gleichmäßig verteilt. Der Mitnehmerarm 6 verdreht den dritten Außenkranz 30 um einen Verdrehwinkel 43. dadurch wird die dritte Rolle 18, die an dem dritten Innenkranz 29 bzw. zweiten Außenkranz 28 befestigt ist, bewegt und rollt auf dem zweiten Innenkranz 27 ab. Dadurch wird der dritte Innenkranz 29 bzw. der zweite Außenkranz 28 in Bewegung versetzt und treibt damit die erste Rolle 8. Die erste Rolle 8 ist wiederum an dem zweiten Innenkranz 27 bzw. dem ersten Außenkranz 26 befestigt und rollt auf der orstfesten Wand 38 bzw. dem ersten Innenkranz 25 ab. Hierdurch wird der zweite Innenkranz 27 in Bewegung versetzt, auf dem wiederum die dritte Rolle 18 abrollt. Hierdurch ergibt sich also in gleicher Weise eine gleichmäßige Geschwindigkeitsverteilung wie bei der Anordnung übereinander. Um zu gewährleisten, dass die erste, zweite und dritte Leitungsführungseinrichtungen 4, 5 und 15 an den jeweiligen Kränzen anliegen, können weiterhin ein erster Zwischenwagen 45, ein zweiter Zwischenwagen 46 und ein dritter Zwischenwagen 47 vorgesehen sein.

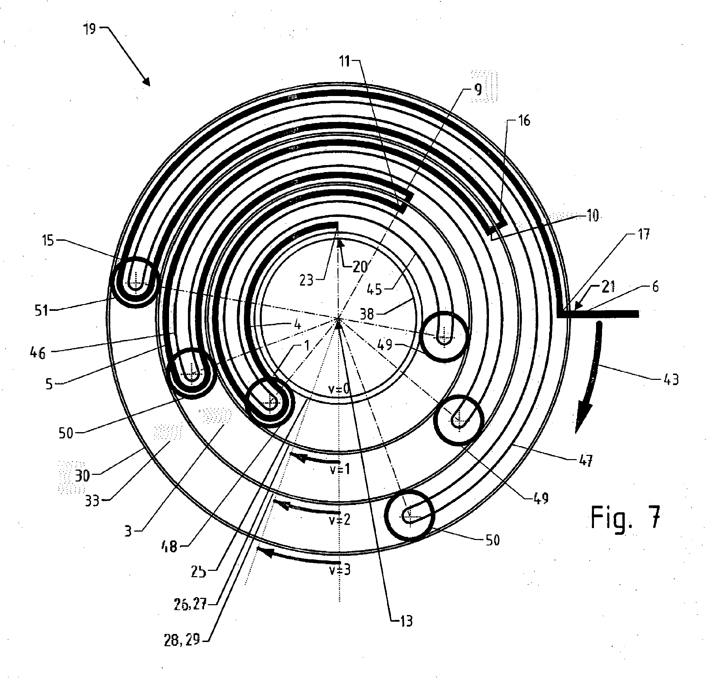

Die Anordnung in Fig. 7 ist dem Grundsatz nach die gleiche wie in Fig. 6, wobei hier die Zwischenwagen 45, 46 und 47 die Befestigungspunkte für die paarigen ersten Übertragungsrollen 48, zweiten Übertragungsrollen 49 und dritten Übertragungsrollen 50 bilden. die Geschwindigkeitsverteilung ist hierbei die gleiche wie in den vorigen Beispielen, weil die Zwischenwagen eine Bewegung der Leitungsführungseinrichtungen erzwingt, die dann, in diesem Beispiel von innen nach außen, jeweils halbiert auf den gegenüberliegenden Kranz übertragen.

Mit der hier dargestellten Erfindung kann ein großer Verdrehwinkel erreicht werden, wobei die Leitungsführungseinrichtungen minimal mechanisch belastet werden. Die Anordnung eignet sich insbesondere auch für Anwendungen, bei denen eine ruckelfreie Verdrehung stattfinden soll, weil die Leitungsführungseinrichtungen in den benachbarten Führungskanälen stets zugleich in Bewegung versetzt werden.

### Bezugszeichenliste

- 1: erster Führungskanal
- 2: erster Rollwagen
- 3: zweiter Führungskanal
- 4: erste Leitungsführungseinrichtung
- 5: zweite Leitungsführungseinrichtung
- 6: Mitnehmerarm
- 7: Positionsanzeiger
- 8: erste Rolle
- 9: zweites Endglied
- 10: zweites Anschlussglied
- 11: erstes Endglied
- 12: dritte Rolle
- 13: Achse
- 14: zweiter Rollwagen
- 15: dritte Leitungsführungseinrichtung
- 16: drittes Anschlussglied
- 17: drittes Endglied
- 18: dritte Rolle
- 19: Energieführungsvorrichtung
- 20: ortsfester Anschlusspunkt
- 21: beweglicher Anschlusspunkt
- 22: erster Abschnitt
- 23: erstes Anschlussglied
- 24: zweiter Abschnitt
- 25: erster Innenkranz
- 26: erster Außenkranz
- 27: zweiter Innenkranz
- 28: zweiter Außenkranz
- 29: dritter Innenkranz
- 30: dritter Außenkranz
- 31: erste Wand
- 32: erster Boden
- 33: dritter Führungskanal
- 34: zweite Wand
- 35: zweiter Boden
- 36: ortsfeste Führung
- 37: ortsfester Boden
- 38: ortsfeste Wand
- 39: dritter Rollwagen
- 40: Radius des Innenkranzes
- 41: Radius des Außenkranzes
- 42: Winkelanzeige
- 43: Verdrehwinkel
- 44: Geschwindigkeitsprofil
- 45: erster Zwischenwagen
- 46: zweiter Zwischenwagen
- 47: dritter Zwischenwagen
- 48: erste Übertragungsrolle
- 49: zweite Übertragungsrolle
- 50: dritte Übertragungsrolle

## Patentansprüche

1. Energieführungsvorrichtung (19), umfassend:
- wenigstens eine erste Leitungsführungseinrichtung (4) zum Führen von Leitungen, Schläuchen oder dergleichen zwischen einem ortsfesten Anschlusspunkt (20) und einem beweglichen Anschlusspunkt (21), wobei die erste Leitungsführungseinrichtung (4) ein erstes Endglied (11), ein erstes Anschlussglied (23) und einen zwischen dem ersten Endglied (11) und dem ersten Anschlussglied (23) und mit diesen verbundenen ersten Abschnitt (22) aufweist, die zusammen einen Kanal zur Aufnahme von Leitungen, Schläuchen oder dergleichen bilden,
- einen ersten Führungskanal (1), der durch einen ersten Innenkranz (25) und einen ersten Außenkranz (26) gebildet ist,
- wenigstens einen zweiten Führungskanal (3), der durch einen zweiten Innenkranz (27) und einen zweiten Außenkranz (28) gebildet ist,
wobei der erste und der zweite Führungskanal (1,3) relativ zueinander um eine gemeinsame Achse (13) verdrehbar sind, und
wobei in dem wenigstens einen zweiten Führungskanal (3) wenigstens eine zweite Leitungsführungseinrichtung (5) angeordnet ist,
wobei die zweite Leitungsführungseinrichtung (5) ein zweites Endglied (9), ein zweites Anschlussglied (10) und einen zwischen dem zweiten Endglied (9) und dem zweiten Anschlussglied (10) und mit diesen verbundenen zweiten Abschnitt (24) aufweist, die zusammen einen Kanal zur Aufnahme von Leitungen, Schläuchen oder dergleichen bilden,
wobei die benachbarten ersten und zweiten Anschlussglieder (10,23) oder ersten und zweiten Endglieder (9,11) miteinander verbunden sind **dadurch gekennzeichnet, daß** die erste Leitungsführungseinrichtung (4) in dem ersten Führungskanal (1) angeordnet und das erste Endglied (11) mit dem ersten Innenkranz (25) oder dem ersten Außenkranz (23) und das erste Anschlussglied (23) mit dem jeweils anderen ersten Außenkranz (26) bzw. ersten Innenkranz (25) verbunden sind.

2. Energieführungsvorrichtung (19) nach Anspruch 1, wobei der Außenkranz (26) oder der Innenkranz (25) des ersten Führungskanals (1) ortsfest ist.

3. Energieführungsvorrichtung (19) nach Anspruch 1 oder 2, wobei die Führungskanäle (1,3) übereinander angeordnet sind.

4. Energieführungsvorrichtung (19) nach einem der vorhergehenden Ansprüche, wobei zwei benachbarte Innenkränze (25,27,29) oder zwei benachbarte Außenkränze (26,28,30) eine erste Wand (31) eines ersten Rollwagens (2) bilden und der erste Rollwagen (2) weiterhin einen ersten Boden (32) aufweist, an dem gegenüber der ersten Wand (31) eine erste Rolle (8) angeordnet ist.

5. Energieführungsvorrichtung (19) nach Anspruch 3, wobei ein benachbarter zweiter Rollwagen (14) eine der ersten Wand (31) des ersten Rollwagens (2) gegenüberliegende zweite Wand (34) und einen zweiten Boden (35) aufweist, wobei die zwei benachbarten Rollwagen (2,14) einen Führungskanal (3) umschließen.

6. Energieführungsvorrichtung (19) nach Anspruch 4 oder 5, wobei der erste Führungskanal (1) eine ortsfeste Führung (36), einen ortsfesten Boden (37) und eine ortsfeste Wand (38) aufweist, wobei die ortsfeste Wand (38) ein Auflager für die erste Rolle (8) bildet.

7. Energieführungsvorrichtung (19) nach einem der vorhergehenden Ansprüche, wobei wenigstens drei übereinander angeordnete Führungskanäle (1,3,33) vorgesehen sind, in denen jeweils wenigstens eine Leitungsführungseinrichtung (4,5,15) angeordnet ist.

8. Energieführungsvorrichtung (19) nach den vorhergehenden Ansprüchen 4 bis 7, wobei die erste Wand (31) des ersten Rollwagens (2) zur ortsfesten Führung (36) hin eine dritte Rolle (12) aufweist, die auf der ortsfesten Führung (36) abrollt, und eine zweite Rolle (18) zwischen einem darauf angeordneten Rollwagen (39) und dem ersten Rollwagen (2) angeordnet ist.

9. Energieführungsvorrichtung (19) nach Anspruch 8, wobei die zweite Rolle (18) an dem zweiten Rollwagen (14) angeordnet ist.

10. Energieführungsvorrichtung (19) nach einem der vorhergehenden Ansprüche, wobei ein Führungskanal (1,3,33) einen Boden (32,35) und eine mit dem Boden (32,35) verbundene Wand (31,34) bildet und an dem Boden (32,35) gegenüber der Wand eine Rolle (8,18) angeordnet ist, wobei die Rolle (8,18) auf einer darunter angeordneten Wand (31,38) abrollt und eine darüber angeordnete Wand (34,39) auf der Rolle (8,18) abrollt.

11. Energieführungsvorrichtung (19) nach einem der vorhergehenden Ansprüche, wobei der Radius (40) der Innenkränze (25,27,29) und/oder der Radius (41) der Außenkränze (26,28,30) der verschiedenen Führungskanäle (1,3,33) jeweils gleich sind.

12. Energieführungsvorrichtung (19) nach Anspruch 1 oder 2, wobei die Führungskanäle (1,3) nebeneinander angeordnet sind und der erste Außenkranz (26) des ersten Führungskanals (1) und der zweite Innenkranz (27) des zweiten Führungskanals (3) durch eine gemeinsame Wand gebildet werden.

13. Energieführungsvorrichtung (19) nach einem der vorhergehenden Ansprüche, wobei Rollen (8,12,18) zwischen den Führungskanälen (1,3,33) vorgesehen sind und mindestens eine der Rollen (8,18) eine Geschwindigkeitsübersetzung für angrenzende Führungskanäle (1,3,33) bildet.

14. Energieführungsvorrichtung (19) nach Anspruch 12, wobei in zumindest einem Führungskanal (1, 3, 33) jeweils ein Zwischenwagen (45, 46, 47) vorgesehen ist, der auf den Abschnitt (22,24) der jeweiligen Leitungsführungseinrichtung (4,5,15) einwirkt und an dem jeweils zumindest eine Rolle (48,49,50) befestigt ist, die an dem jeweiligen Innenkranz (25,27,29) und dem jeweiligen Außenkranz (26,28,30) abrollt.

15. Energieführungsvorrichtung (19) nach einem der vorhergehenden Ansprüche, wobei die Leitungsführungseinrichtungen (4,5,15) jeweils nur in einer Ebene beugbar sind.

16. Energieführungsvorrichtung (19) nach einem der vorhergehenden Ansprüche 1 bis 14, wobei ein Anschlussglied (10,16,23) und ein Endglied (9,11,17) in mindestens einem der Führungskanäle (1,3,33) übereinander angeordnet sind.

17. Energieführungsvorrichtung (19) nach einem der vorhergehenden Ansprüche, wobei der Innenkranz (25,27,29) und der Außenkranz (26,28,30) eines Führungskanals (1,3,14) seitliche Wände (31,34,38,39) ausbilden und die Endglieder (9,11,17) und die Anschlussglieder (10,16,23) an den seitlichen Wänden (31,34,38,39) angeordnet sind.

## Claims

1. A power conducting device (19), comprising:
- at least one first line guiding device (4) for guiding lines, hoses or the like between a stationary connecting point (20) and a movable connecting point (21),
the first line guiding device (4) having a first end member (11), a first connecting member (23) and a first section (22) which is connected between the first end member (11) and the first connecting member (23) and is connected to them, which together form a channel for receiving lines, hoses or the like,
- a first guiding channel (1) which is formed by a first inner ring (25) and a first outer ring (26),
- at least one second guiding channel (3) which is formed by a second inner ring (27) and a second outer ring (28),
it being possible for the first and the second guiding channels (1, 3) to be twisted relative to one another about a common axis (13), and
at least one second line guiding device (5) being arranged in the at least one second guiding channel (3),
the second line guiding device (5) having a second end member (9), a second connecting member (10) and a second section (24) which is connected between the second end member (9) and the second connecting member (10) and is connected to them, which together form a channel for receiving lines, hoses or the like,
the adjacent first and second connecting members (10, 23) or first and second end members (9, 11) being connected to one another,
**characterized by**
the first line guiding device (4) being arranged in the first guiding channel (1), and the first end member (11) being connected to the first inner ring (25) or the first outer ring (23) and the first connecting member (23) being connected to the respectively other first outer ring (26) or first inner ring (25).

2. The power conducting device (19) as claimed in claim 1, the outer ring (26) or the inner ring (25) of the first guiding channel (1) being stationary.

3. The power conducting device (19) as claimed in claim 1 or 2, the guiding channels (1,3) being arranged above one another.

4. The power conducting device (19) as claimed in one of the preceding claims, two adjacent inner rings (25, 27, 29) or two adjacent outer rings (26, 28, 30) forming a first wall (31) of a first roller carriage (2) and, furthermore, the first roller carriage (2) having a first bottom (32), on which a first roller (8) is arranged opposite the first wall (31).

5. The power conducting device (19) as claimed in claim 3, an adjacent second roller carriage (14) having a second bottom (35) and a second wall (34) which lies opposite the first wall (31) of the first roller carriage (2), the two adjacent roller carriages (2, 14) enclosing a guiding channel (3).

6. The power conducting device (19) as claimed in claim 4 or 5, the first guiding channel (1) having a stationary guide (36), a stationary bottom (37) and a stationary wall (38), the stationary wall (38) forming a support for the first roller (8).

7. The power conducting device (19) as claimed in one of the preceding claims, at least three guiding channels (1, 3, 33) which are arranged above one another being provided, in which in each case at least one line guiding device (4, 5, 15) is arranged.

8. The power conducting device (19) as claimed in preceding claims 4 to 7, the first wall (31) of the first roller carriage (2) having a third roller (12) toward the stationary guide (36), which third roller (12) rolls on the stationary guide (36), and a second roller (18) being arranged between a roller carriage (39), arranged thereon, and the first roller carriage (2).

9. The power conducting device (19) as claimed in claim 8, the second roller (18) being arranged on the second roller carriage (14).

10. The power conducting device (19) as claimed in one of the preceding claims, a guiding channel (1, 3, 33) forming a bottom (32, 35) and a wall (31, 34) which is connected to the bottom (32, 35), and a roller (8, 18) being arranged on the bottom (32, 35) opposite the wall, the roller (8, 18) rolling on a wall (31, 38) which is arranged underneath, and a wall (34, 39) which is arranged above rolling on the roller (8, 18).

11. The power conducting device (19) as claimed in one of the preceding claims, the radius (40) of the inner rings (25, 27, 29) and/or the radius (41) of the outer rings (26, 28, 30) of the different guiding channels (1, 3, 33) being in each case identical.

12. The power conducting device (19) as claimed in claim 1 or 2, the guiding channels (1, 3) being arranged next to one another, and the first outer ring (26) of the first guiding channel (1) and the second inner ring (27) of the second guiding channel (3) being formed by a common wall.

13. The power conducting device (19) as claimed in one of the preceding claims, rollers (8, 12, 18) being provided between the guiding channels (1, 3, 33), and at least one of the rollers (8, 18) forming a speed step-up transmission means for adjacent guiding channels (1, 3, 33).

14. The power conducting device (19) as claimed in claim 12, in each case one intermediate carriage (45, 46, 47) being provided in at least one guiding channel (1, 3, 33), which intermediate carriage (45, 46, 47) acts on the section (22, 24) of the respective line guiding device (4, 5, 15), and to which intermediate carriage (45, 46, 47) in each case at least one roller (48, 49, 50) is fastened which rolls on the respective inner ring (25, 27, 29) and the respective outer ring (26, 28, 30).

15. The power conducting device (19) as claimed in one of the preceding claims, it being possible for the line guiding devices (4, 5, 15) to be bent in each case only in one plane.

16. The power conducting device (19) as claimed in one of the preceding claims 1 to 14, a connecting member (10, 16, 23) and an end member (9, 11, 17) being arranged above one another in at least one of the guiding channels (1, 3, 33).

17. The power conducting device (19) as claimed in one of the preceding claims, the inner ring (25, 27, 29) and the outer ring (26, 28, 30) of a guiding channel (1, 3, 14) forming lateral walls (31, 34, 38, 39), and the end members (9, 11, 17) and the connecting members (10, 16, 23) being arranged on the lateral walls (31, 34, 38, 39).

## Revendications

1. Chaîne de distribution d'énergie (19), comprenant :
- au moins un premier dispositif de guidage de lignes (4) destiné à guider des lignes, des tuyaux ou similaires entre un point de raccordement fixe (20) et un point de raccordement mobile (21),
le premier dispositif de guidage de lignes (4) possédant un premier élément d'extrémité (11), un premier élément de raccordement (23) ainsi qu'une première portion (22) disposée entre le premier élément d'extrémité (11) et le premier élément de raccordement (23) et reliée à ceux-ci, lesquels forment ensemble un canal destiné à accueillir des lignes, tuyaux ou similaires,
- un premier canal de guidage (1) qui est formé par une première couronne interne (25) et une première couronne externe (26),
- au moins un deuxième canal de guidage (3) qui est formé par une deuxième couronne interne (27) et une deuxième couronne externe (28),
le premier et le deuxième canal de guidage (1, 3) pouvant effectuer une rotation l'un par rapport à l'autre autour d'un axe (13) commun, et
au moins un deuxième dispositif de guidage de lignes (5) étant disposé dans l'au moins un deuxième canal de guidage (3),
le deuxième dispositif de guidage de lignes (5) possédant un deuxième élément d'extrémité (9), un deuxième élément de raccordement (10) ainsi qu'une deuxième portion (24) disposée entre le deuxième élément d'extrémité (9) et le deuxième élément de raccordement (10) et reliée à ceux-ci, lesquels forment ensemble un canal destiné à accueillir des lignes, tuyaux ou similaires,
les premier et deuxième éléments de raccordement (10, 23) voisins ou les premier et deuxième éléments d'extrémité (9, 11) voisins étant reliés entre eux,
**caractérisé en ce que** le premier dispositif de guidage de lignes (4) est disposé dans le premier canal de guidage (1) et le premier élément d'extrémité (11) est relié à la première couronne interne (25) ou à la première couronne externe (26), et le premier élément de raccordement (23) est relié à l'autre première couronne externe (26) respective ou la première couronne interne (25).

2. Chaîne de distribution d'énergie (19) selon la revendication 1, la couronne externe (26) ou la couronne interne (25) du premier canal de guidage (1) étant fixe.

3. Chaîne de distribution d'énergie (19) selon la revendication 1 ou 2, les canaux de guidage (1, 3) étant disposés l'un au-dessus de l'autre.

4. Chaîne de distribution d'énergie (19) selon l'une des revendications précédentes, deux couronnes internes (25, 27, 29) voisines ou deux couronnes externes (26, 28, 30) voisines formant une première paroi (31) d'un premier chariot roulant (2), et le premier chariot roulant (2) possédant en plus un premier fond (32) sur lequel est disposée une première roulette (8) à l'opposé de la première paroi (31).

5. Chaîne de distribution d'énergie (19) selon la revendication 3, un deuxième chariot roulant (14) voisin possédant une deuxième paroi (34) à l'opposé de la première paroi (31) du premier chariot roulant (2) et un deuxième fond (35), les deux chariots roulants (2, 14) voisins entourant un canal de guidage (3).

6. Chaîne de distribution d'énergie (19) selon la revendication 4 ou 5, le premier canal de guidage (1) possédant un guide fixe (36), un fond fixe (37) et une paroi fixe (38), la paroi fixe (38) formant un appui pour la première roulette (8).

7. Chaîne de distribution d'énergie (19) selon l'une des revendications précédentes, trois canaux de guidage (1, 3, 33) étant présents, lesquels sont disposés les uns au-dessus des autres et dans lesquels est respectivement disposé au moins un dispositif de guidage de lignes (4, 5, 15).

8. Chaîne de distribution d'énergie (19) selon l'une des revendications 4 à 7, la première paroi (31) du premier chariot roulant (2) possédant une troisième roulette (12) en direction du guide fixe (36), laquelle roule sur le guide fixe (36), et une deuxième roulette (18) étant disposée entre un chariot roulant (39) disposé sur celle-ci et le premier chariot roulant (2).

9. Chaîne de distribution d'énergie (19) selon la revendication 8, la deuxième roulette (18) étant disposée sur le deuxième chariot roulant (14).

10. Chaîne de distribution d'énergie (19) selon l'une des revendications précédentes, un canal de guidage (1, 3, 33) formant un fond (32, 35) et une paroi (31, 34) reliée au fond (32, 35) et une roulette (8, 18) étant disposée sur le fond (32, 35) à l'opposé de la paroi, la roulette (8, 18) roulant sur une paroi (31, 38) disposée au-dessous et une paroi (34, 39) disposée au-dessus roulant sur la roulette (8, 18).

11. Chaîne de distribution d'énergie (19) selon l'une des revendications précédentes, le rayon (40) des couronnes internes (25, 27, 29) et/ ou le rayon (41) des couronnes externes (26, 28, 30) des différents canaux de guidage (1, 3, 33) étant respectivement identiques.

12. Chaîne de distribution d'énergie (19) selon la revendication 1 ou 2, les canaux de guidage (1, 3) étant disposés l'un à côté de l'autre et la première couronne externe (26) du premier canal de guidage (1) et la deuxième couronne interne (27) du deuxième canal de guidage (3) étant formées par une paroi commune.

13. Chaîne de distribution d'énergie (19) selon l'une des revendications précédentes, des roulettes (8, 12, 18) se trouvant entre les canaux de guidage (1, 3, 33) et au moins l'une des roulettes (8, 18) formant un démultiplicateur de vitesse pour les canaux de guidage (1, 3, 33) adjacents.

14. Chaîne de distribution d'énergie (19) selon la revendication 12, un chariot intermédiaire (45, 46, 47) étant respectivement présent dans au moins un canal de guidage (1, 3, 33), lequel agit sur la portion (22, 24) du dispositif de guidage de lignes (4, 5, 15) correspondant et est fixé à l'au moins une roulette (48, 49, 50) respective qui roule sur la couronne interne (25, 27, 29) correspondante et sur la couronne externe (26, 28, 30) correspondante.

15. Chaîne de distribution d'énergie (19) selon l'une des revendications précédentes, les dispositifs porte-ligne (4, 5, 15) pouvant respectivement être fléchis dans seul un plan.

16. Chaîne de distribution d'énergie (19) selon l'une des revendications précédentes 1 à 14, un élément de raccordement (10, 16, 23) et un élément d'extrémité (9, 11, 17) étant disposés l'un au-dessus de l'autre dans au moins l'un des canaux de guidage (1, 3, 33).

17. Chaîne de distribution d'énergie (19) selon l'une des revendications précédentes, la couronne interne (25, 27, 29) et la couronne externe (26, 28, 30) d'un canal de guidage (1, 3, 14) formant des parois latérales (31, 34, 38, 39), et les éléments d'extrémité (9, 11, 17) et les éléments de raccordement (10, 16, 23) étant disposés sur les parois latérales (31, 34, 38, 39).
